Europäisches Patentamt

European Patent Office

Office européen des brevets

(11) Veröffentlichungsnummer: **0 140 014**
**B1**

(12) **EUROPÄISCHE PATENTSCHRIFT**

(45) Veröffentlichungstag der Patentschrift:
01.06.88

(51) Int. Cl.⁴: **H 04 Q 1/10**

(21) Anmeldenummer: 84110274.2

(22) Anmeldetag: 29.08.84

(54) Gestell-System für den Schwachstrom-Anlagebau, insbesondere für Verteiler-Anlagen.

(30) Priorität: 05.09.83 CH 4849/83

(43) Veröffentlichungstag der Anmeldung:
08.05.85 Patentblatt 85/19

(45) Bekanntmachung des Hinweises auf die Patenterteilung:
01.06.88 Patentblatt 88/22

(84) Benannte Vertragsstaaten:
DE FR GB IT SE

(56) Entgegenhaltungen:
DE - A - 1 943 827
DE - A - 2 515 573
DE - B - 1 490 145

(73) Patentinhaber: Reichle + De-Massari AG
Elektroingenieure, Binzstrasse 31, CH-8620 Wetzikon
(CH)

(72) Erfinder: Reichle, Hans, Guldislooweg 16,
CH-8620 Wetzikon ZH (CH)

(74) Vertreter: Petschner, Goetz, Patentanwaltsbüro G.
Petschner Seidengasse 18, CH-8001 Zürich (CH)

ACTORUM AG

## Beschreibung

Die vorliegende Erfindung betrifft ein Gestell-System für den Schwachstrom-Anlagebau, insbesondere für Verteiler-Anlagen, das aus mehreren Einheiten nach dem Baukastenprinzip zusammensetzbar ist, welche Einheiten insbesondere durch Querstreben verbindbare Vertikal-Träger und daran direkt oder indirekt befestigbare Mehrfach-Anschlußleisten umfassen (DE-B-1 490 145).

In der Telefonie oder anderen Signal-Übertragungsbereichen gewinnen Gestell-Systeme der vorgenannten Art ständig an Bedeutung, um die zahlenmäßig erheblich wachsenden Zuleitungen übersichtlich und rationell andrahten zu können.

Hierbei wird angestrebt, solche Gestell-Systeme als Baukästen auszubilden, um den Aufbau der Gestelle aus genormten Teilen auf Grund eines Baumusterplanes oder dergleichen wirtschaftlich zu verbessern.

Dies wird mit den heutigen Mitteln allerdings nur unvollkommen erreicht, indem als Vertikalelemente lediglich U-Profile Verwendung finden, die in der Regel nur als Wandverteiler brauchbar sind, dagegen für freistehende Verteiler eine komplizierte Zusatzgestell-Konstruktion voraussetzen. Zudem bilden die nach vorn freien Kanten der Vertikal-Profile Quellen höchster Verletzungsgefahr für die am betreffenden Gestell arbeitenden Personen. Weiter sind Querstreben oder dergleichen an den frontseitig offenen U-Profilen anzubringen, an die sich dann erst die Mehrfach-Anschlußleisten befestigen lassen, insbesondere dann, wenn diese lösbar sein sollen.

Es ist nun Aufgabe der vorliegenden Erfindung, ein Gestell-System für den Schwachstrom-Anlagebau, insbesondere für Verteiler-Anlagen zu schaffen, das allen zu stellenden Anforderungen genügt; insbesondere mit wenigen Grundelementen einen individuellen und vielseitigen Aufbau gestattet und eine optimale, absolut verletzungssichere Handhabung erlaubt.

Dies wird nun erfindungsgemäß dadurch erreicht, daß die Vertikal-Träger selbsttragende Säulen aus einem frontseitig offenen Kastenprofil sind, deren offenseitige Längskanten aus einer frontseitigen, zur Rückwand der Säulen parallelen Verbindungsfläche heraus je über mindestens eine zu den Seitenwänden der Säulen parallel verlaufende Wandungspartie nach innen eingezogen sind, wobei mindestens die Rückwand, die frontseitigen Verbindungsflächen und die Seitenwände der Säulen Perforationen zur lösbaren Befestigung der Säulen untereinander bzw. von weiteren Einheiten des Systems an den Säulen aufweisen.

Bereits hier ergibt sich schon ein Gestell-System, das nunmehr allen zu stellenden Anforderungen genügen kann und insbesondere mit wenigen Grundelementen einen sehr individuellen und vielseitigen Aufbau bei optimaler, verletzungssicherer Handhabung erlaubt.

Um die verletzungsgefährlichen offenseitigen Längskanten an den Säulen noch weiter nach innen weg von der am Verteiler arbeitenden Person zu bringen, besteht eine vorteilhafte Ausgestaltung des erfindungsgemäßen Gestell-Systems darin, daß sich jede der offenseitigen Längskanten der Säulen an einem, an der betreffenden seitenwandlich parallel verlaufenden Wandungspartie anschließenden, gegen die betreffende Seitenwand gerichteten weiteren Wandungsteil erstreckt.

Zudem besteht die Möglichkeit, an den eingezogenen offenseitigen Längskanten der Säulen Kabel-Kämme aufzustecken, wofür vorzugsweise die Kabel-Kämme von einem Längssteg abragende Zungen umfassen, wobei der Längssteg in seiner Längserstreckung als U-förmiger Aufsteckbügel ausgebildet ist. Dies gestattet dann in vorteilhafter Weise, daß die Zungen der Kabel-Kämme zusammen mit den Wandungen der Säulen wenigstens angenähert geschlossene Kabel-Kanäle begrenzen.

Für eine «bruchsichere» Einbringung von Einzeldrähten oder Drahtbündel in die von den Zungen begrenzten Ausnehmungen ist es dabei vorteilhaft, wenn jede Zunge der Kabel-Kämme in der Längserstreckung des Längssteges schräggestellt ist, wobei die Erstreckungsebenen der schrägstehenden Zungen mit der Erstreckungsebene des Längssteges einen spitzen Winkel einschließen und zwischen den Trennkanten an den freien Enden benachbarter Zungen ein Quer-Abstand besteht, der senkrecht zur Erstreckungsebene der Zungen wesentlich größer ist als der Abstand der benachbarten Trennkanten in Längserstreckung des Längssteges.

Für eine weitere Ausgestaltung des erfindungsgemäßen Gestell-Systems zur Erhöhung des Verwendungsbereiches ist es vorteilhaft, wenn die Perforationen an den frontseitigen Verbindungsflächen der Säulen durch horizontale Schlitze zur steckbaren Aufnahme der Mehrfach-Anschlußleisten gebildet sind; und die Perforationen an den Seitenwänden der Säulen System-Bohrungen sind, die der steckbaren Aufnahme weiterer System-Einheiten dienen. Dies erlaubt, eine an die frontseitige Verbindungsflächen der Säulen ansteckbare Beschaltungs-Konsole zur Beschaltung sonst schwer zugänglicher Steckerleisten vorzusehen. Zudem kann dann eine weitere System-Einheit ein Prüftisch sein. Ferner ist es möglich, im Bereich der parallel verlaufenden Wandungspartien an den Säulen Abdeckplättchen mit rückseitigen federelastischen Mitteln klemmend aufzusetzen.

Beispielsweise Ausführungsformen des Erfindungsgegenstandes sind nachfolgend anhand der Zeichnung näher erläutert. Es zeigen:

Fig. 1 in schaubildartiger Teilansicht ein erfindungsgemäßes Gestell-System;

Fig. 2 in schaubildartiger Teilansicht, in größerem Maßstab, einzelne System-Einheiten in ihrer Ausgestaltung und Verknüpfung;

Fig. 3 in schaubildartiger Teilansicht, in größerem Maßstab ein weiteres Detail des erfindungsgemäßen Gestell-Systems und

Fig. 4 in schaubildartiger Darstellung eine weitere am Gestell-System verwendbare System-Einheit.

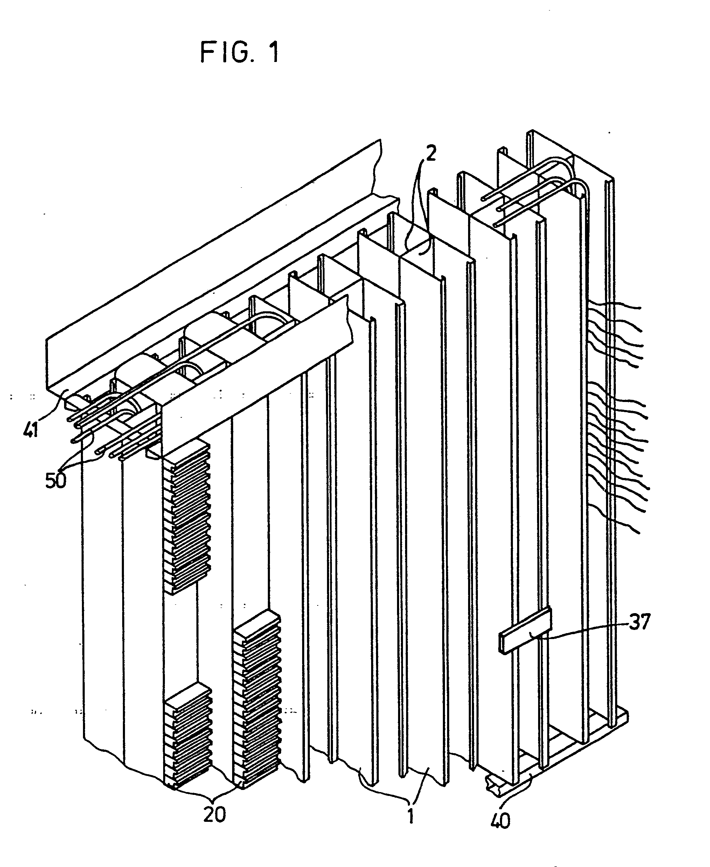

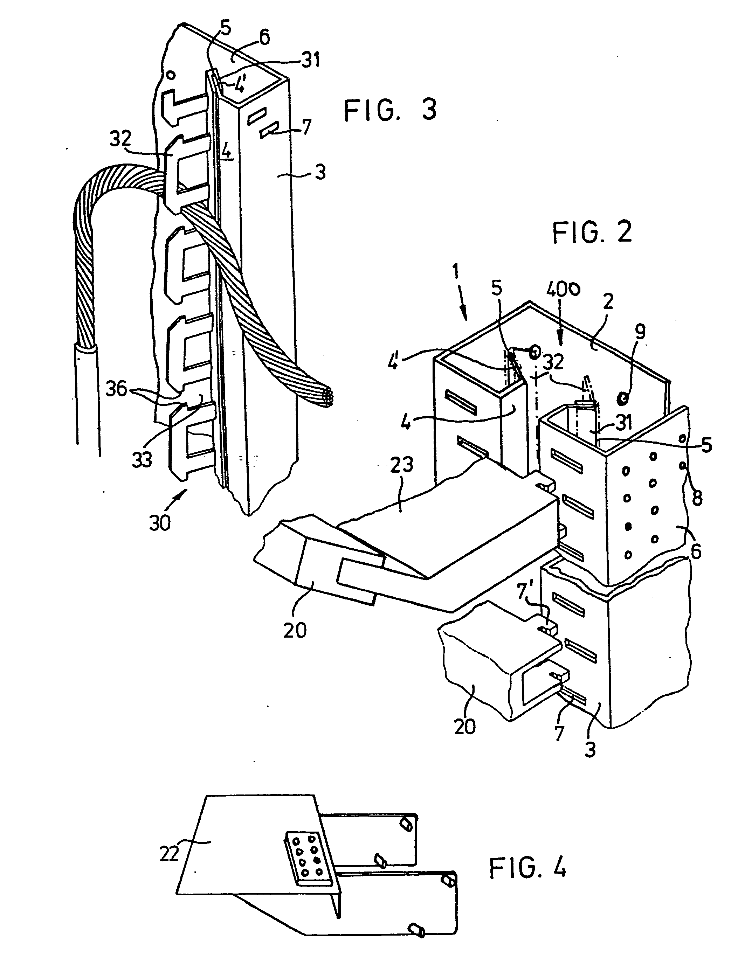

Das in den Fig. 1 bis 4 veranschaulichte Gestell-System für den Schwachstrom-Anlagebau, insbesondere für Verteiler-Anlagen, besteht hier zunächst aus Vertikal-Trägern 1, die hier selbsttragende Säulen aus einem frontseitig offenen Kastenprofil sind, deren offenseitige Längskanten 5 aus einer frontseitigen, zur Rückwand 2 der Säulen 1 parallelen Verbindungsfläche 3 heraus je über eine zu den Seitenwänden 6 der Säulen parallel verlaufende Wandungspartie 4 nach innen eingezogen sind. Insbesondere die Fig. 2 und 3 zeigen dabei deutlich, daß sich jede der offenseitigen Längskanten 5 der Säulen 1 an einem, an der betreffenden seitenwandlich parallel verlaufenden Wandungspartie 4 anschließenden, gegen die betreffende Seitenwand 6 gerichteten weiteren Wandungsteil 4' erstreckt.

Weiter ist erkennbar, daß die Rückwand 2, die frontseitigen Verbindungsflächen 3 und die Seitenwände 6 der Säulen 1 Perforationen 9 bzw. 7 bzw. 8 zur lösbaren Befestigung der Säulen 1 untereinander bzw. von weiteren Einheiten des Systems an den Säulen aufweisen, wie das nachfolgend noch näher beschrieben ist.

Gemäß Fig. 1 sind hier eine Mehrzahl Säulen 1 nebeneinander mit vorgegebenem Abstand untereinander und hintereinander Rückwand 2 und Rückwand 2 zu einem freistehenden Verteiler zusammengefaßt, wofür es zusätzlich lediglich eines Bodenrahmens 40 und eines Oberrahmens 41 bedarf, wobei letzterer als Rangierkanal für die anzuschließenden Kabelstränge 50 ausgestaltet sein kann. Frontseitig der Säulen 1 werden dann eine entsprechende Anzahl Mehrfach-Anschlußleisten 20 sowie gegebenenfalls Abdeckplatten 37, welche beispielsweise im Bereich der parallel verlaufenden Wandungspartien 4 an den Säulen 1 Abdeckplättchen 37 mit nicht näher gezeigten rückseitigen federelastischen Mitteln klemmend aufsetzbar sind, aufgebracht, wie das nachfolgend noch näher erläutert ist.

Für das rationelle Anbringen zunächst der Mehrfach-Anschlußleisten 20 sind die Perforationen 7 an den frontseitigen Verbindungsflächen 3 der Säulen 1 durch horizontale Schlitze zur steckbaren Aufnahme der Mehrfach-Anschlußleisten 20 gebildet. Entsprechend weisen die Mehrfach-Anschlußleisten 20 rückseitige Verbindungshaken 7' auf. In gleicher Weise ist temporär eine sogenannte Beschaltungs-Konsole 23 am Gestell anbringbar, auf die sonst schwer zugängliche Mehrfach-Anschlußleisten 20 für den Beschaltungsvorgang aufgesteckt werden können.

Weiter zeigt insbesondere Fig. 2, daß die Perforationen 8 an den Seitenwänden 6 der Säulen 1 System-Bohrungen sind, die der steckbaren Aufnahme weiterer System-Einheiten dienen. Ein solche System-Einheit ist beispielsweise ein temporär seitlich anschlagbarer Prüftisch 22 gemäß Fig. 4.

Wie nun insbesondere Fig. 2 und 3 zeigen, ergibt sich eine sehr vorteilhafte Ausgestaltung der Anordnung dadurch, daß auf die offenseitigen Längskanten 5 der Säulen 1 Kabel-Kämme 30 aufsteckbar sind, wofür die Kabel-Kämme 30 von einem Längssteg 31 abragende Zungen 32 umfassen, wobei der Längssteg in seiner Längserstreckung als U-förmiger Aufsteckbügel ausgebildet ist. Dies gestattet, daß die Zungen 32 der Kabel-Kämme 30 zusammen mit den Wandungen 2,3,4,4' und 6 der Säulen 1 wenigstens angenähert geschlossene Kabel-Kanäle 400 begrenzen.

Bei diesem betreffenden Kabel-Kanal, bei dem gemäß Fig. 3 die Zungen 32 an ihren freien Enden durch Trennkanten 36 einander eng benachbart sind und näher dem Längssteg 31 mit den jeweils benachbarten Zungen 32 eine Ausnehmung 33 zum Hindurchführen eines Einzeldrahtes oder eines Drahtbündels begrenzen, ist erfindungsgemäß jede Zunge 32 in der Längserstreckung des Längssteges 31 schräggestellt, wobei die Erstreckungsebenen der schrägstehenden Zungen mit der Erstreckungsebene des Längssteges 31 einen spitzen Winkel einschließen und zwischen den Trennkanten 36 an den freien Enden benachbarter Zungen 32 ein Quer-Abstand besteht, der senkrecht zur Erstreckungsebene der Zungen 32 wesentlich größer ist als der Abstand der benachbarten Trennkanten in Längserstreckung des Längssteges. Die Anordnung ist dabei, wie im parallelen Gesuch ausführlich beschrieben, so, daß der Abstand der benachbarten Trennkanten der Zungen in Längserstreckung des Längssteges kleiner ist als der Durchmesser eines am Kabel-Kamm verlegten Einzeldrahtes.

Durch die Schrägstellung der Zungen kann unter einem gegebenen Winkel zur Längserstreckung des Kabel-Kammes mit vorgegebenen Abständen der Trennkanten der Zungen in Querrichtung auch bei einem praktisch Null-Abstand der Trennkanten benachbarter Zungen in der Längserstreckung des Kabel-Kammes jeder Einzeldraht und jedes Kabelbündel leicht zwischen zwei benachbarten Zungen eingedrückt werden. Der sehr geringe Abstand der Trennkanten in der Längserstreckung des Kabel-Kammes sorgt dabei dafür, daß ein wenigstens angenähert rechtwinklig herausgeführter Einzeldraht und somit selbstverständlich auch ein Drahtbündel nicht ungewollt wieder austreten kann.

Aus dem Vorbeschriebenen ergibt sich somit ein Gestell-System für den Schwachstrom-Anlagebau, insbesondere für Verteiler-Anlagen, welches nunmehr allen zu stellenden Anforderungen genügt, wobei mit wenigen Grundelementen ein individueller und sehr vielseitiger Aufbau erreicht wird und sich eine optimale, verletzungssichere Handhabung ergibt.

**Patentansprüche**

1. Gestell-System für den Schwachstrom-Anlagebau, insbesondere für Verteiler-Anlagen, das aus mehreren Einheiten nach dem Baukastenprinzip zusammensetzbar ist, welche Einheiten insbesondere durch Querstreben verbindbare Vertikal-Träger und daran direkt oder indirekt befestigbare Mehrfach-Anschlußleisten umfassen, dadurch gekennzeichnet, daß die Vertikal-Träger (1) selbsttragende Säulen aus einem frontseitig offenen Kastenprofil sind, deren offenseitige Längskanten (5) aus einer frontseitigen, zur Rückwand (2) der Säulen (1) parallelen Verbindungsfläche (3) heraus je über mindestens eine zu den Seitenwänden (6) der Säulen parallel verlaufende Wandungspartie (4) nach innen eingezogen sind, wobei mindestens die Rückwand (2), die frontseitigen Verbindungsflächen (3) und die Seitenwände (6) der Säulen Perforationen (9 bzw. 7 bzw. 8) zur lösbaren Befestigung der Säulen (1) untereinander bzw. von weiteren Einheiten des Systems an den Säulen aufweisen.

2. Gestell-System nach Anspruch 1, dadurch gekennzeichnet, daß sich jede der offenseitigen Längskanten (5) der Säulen (1) an einem, an der betreffenden seitenwandlich parallel verlaufenden Wandungspartie (4) anschließenden, gegen die betreffende Seitenwand (6) gerichteten weiteren Wandungsteil (4') erstreckt.

3. Gestell-System nach Anspruch 1 oder 2, dadurch gekennzeichnet, daß auf die offenseitigen Längskanten (5) der Säulen (1) Kabel-Kämme (30) aufsteckbar sind.

4. Gestell-System nach Anspruch 3, dadurch gekennzeichnet, daß die Kabel-Kämme (30) von einem Längssteg (31) abragende Zungen (32) umfassen, wobei der Längssteg in seiner Längserstreckung als U-förmiger Aufsteckbügel ausgebildet ist.

5. Gestell-System nach Anspruch 4, dadurch gekennzeichnet, daß die Zungen (32) der Kabel-Kämme (30) zusammen mit den Wandungen (2, 3, 4, 4' und 6) der Säulen (1) wenigstens angenähert geschlossene Kabel-Kanäle (400) begrenzen.

6. Gestell-System nach Anspruch 4, dadurch gekennzeichnet, daß jede Zunge (32) der Kabel-Kämme (30) in der Längserstreckung des Längssteges (31) schräggestellt ist, wobei die Erstreckungsebenen der schrägstehenden Zungen mit der Erstreckungsebene des Längssteges (31) einen spitzen Winkel einschließen und zwischen den Trennkanten (36) an den freien Enden benachbarter Zungen (32) ein Quer-Abstand besteht, der senkrecht zur Erstreckungsebene der Zungen (32) wesentlich größer ist als der Abstand der benachbarten Trennkanten in Längserstreckung des Längssteges.

7. Gestell-System nach Anspruch 1, dadurch gekennzeichnet, daß die Perforationen (7) an den frontseitigen Verbindungsflächen (3) der Säulen (1) durch horizontale Schlitze zur steckbaren Aufnahme der Mehrfach-Anschlußleisten (20) gebildet sind; und die Perforationen (8) an den Seitenwänden (6) der Säulen (1) System-Bohrungen sind, die der steckbaren Aufnahme weiterer System-Einheiten dienen.

8. Gestell-System nach Anspruch 7, gekennzeichnet durch eine an die frontseitige Verbindungsflächen der Säulen (1) ansteckbare Beschaltungs-Konsole (23).

9. Gestell-System nach Anspruch 7, dadurch gekennzeichnet, daß eine weitere System-Einheit ein Prüftisch (22) ist.

10. Gestell-System nach Anspruch 1, dadurch gekennzeichnet, daß im Bereich der parallel verlaufenden Wandungspartien (4) an den Säulen (1) Abdeckplättchen (37) mit rückseitigen federelastischen Mitteln klemmend aufsetzbar sind.

**Claims**

1. A frame system for low-current installations, in particular for distributor systems, composed of a plurality of units in mechanical assembly technique, said units comprising in particular, by means of diagonal trussings, connectable vertical supports and connection modules attached directly or indirectly thereon, characterized in that the vertical supports (1) are self-supporting pillars of a box section, which is open foreside, the openside longitudinal edges (5) thereof being of a joining surface (3), which is foreside parallel to the backwall (2) of the pillar (1), and each being bent over inwards, parallel to at least one wall section (4) of the pillars, with at least the backwall (2), the foreside joining surfaces (3), and the side walls (6) of the pillars, having perforations (9 resp. 7 resp. 8) for the detachable anchorage of the pillars (1) with one another, respectively of further units of the system on the pillars.

2. A frame system according to Claim 1, characterized in that each of the open-side longitudinal edges (5) of the pillar (1) extends on a further wall section (4) adjoining the respective sidewall, parallel-running wall section (4), extended against the respective side wall (6).

3. A frame system according to Claim 1 or 2, characterized in that cable teeth (30) can be mounted onto the open-side longitudinal edges (5) of the pillar (1).

4. A frame system according to Claim 3, characterized in that the cable teeth (30) comprise tongues (32), projecting from a longitudinal bar (31), with the longitudinal bar formed as a U-shaped slip-on clamp.

5. A frame system according to Claim 4, characterized in that the tongues (32) of the cable teeth (30), together with the walls (2, 3, 4, 4' and 6) of the pillar (1), define at least approximately closed cable ducts (400).

6. A frame system according to Claim 4, characterized in that each tongue (32) of the cable teeth (30) is oblique in the longitudinal extension of the longitudinal bar (31), with the plane of extension of the oblique tongues and the plane of extension of the longitudinal bar (31), forming a pointed angle and, a lateral spacing existing between the separating edges (36) on the free ends of the neighbouring tongues (32), said lateral spacings being, vertical to the plane of extension of the tongues (32), essentially larger than the spacing of the neighbouring separating edges (36) in longitudinal extension of the longitudinal bar.

7. A frame system according to Claim 1, characterized in that the perforations (7) in the foreside joining surfaces (3) of the pillars (1) are formed as horizontal slots for the plugable installation of the connection modules (20); and the perforations in the side walls (6) of the pillars (1) are system boreholes that serve for the installation of further system units.

8. A frame system according to Claim 7, characterized by a wiring bracket (23) that is plugable onto the foreside joining surface of the pillar (1).

9. A frame system according to Claim 7, characterized in that a further system unit is a test desk (22).

10. A frame system according to Claim 1, characterized in that, in the region of the parallel-running wall section (4) on the pillar (1), small cover plates (37) with rear springy means are in a clamping manner attachable.

**Revendications**

1. Système de bâti pour installation à courant faible, plus particulièrement pour installations de distribution, qui peut être réalisé à partir de plusieurs unités suivant le principe d'un jeu de construction, les unités en question comportant notamment des poutres verticales qui peuvent être reliées par des entretoises et des éléments d'assemblage multiple qui peuvent être fixés directement ou indirectement sur elles, caractérisé en ce que les poutres verticales (1) sont des montants auto-portants d'un profilé en caisson ouvert du côté frontal dont les bords longitudinaux (5) situés du côté ouvert sont, à partir d'une surface d'assemblage (3) située du côté frontal et parallèle à la paroi arrière (2) du montant (1), rabattus à l'intérieur sur au moins une partie de paroi (4) parallèle aux parois latérales (6) du montant, la paroi arrière (2), les surfaces d'assemblage (3) situées du côté frontal et les parois latérales (6) des montants comportant des perforations (9 ou 7 ou 8) pour la fixation, de manière amovible, des montants (1) les uns aux autres ou d'autres unités du système aux montants.

2. Système de bâti selon la revendication 1, caractérisé en ce que chacun des bords longitudinaux (5) des montants (1) situés du côté ouvert s'étend sur une autre partie de paroi (4′) qui fait suite à la partie de paroi (4) correspondante parallèle aux parois latérales et dirigée vers la paroi latérale correspondante (6).

3. Système de bâti selon l'une des revendications 1 ou 2, caractérisé en ce que des râteliers à câbles (30) peuvent être insérés sur les bords longitudinaux (5) des montants (1) situés du côté ouvert.

4. Système de bâti selon la revendication 3, caractérisé en ce que les râteliers à câbles (30) comportent des languettes (32) qui font saillie à partir d'une bande longitudinale (31), cette bande longitudinale ayant, dans le sens de sa longueur la forme d'un étrier en U.

5. Système de bâti selon la revendication 4, caractérisé en ce que les languettes (32) des râteliers à câbles (30) délimitent, avec les parois (2, 3, 4, 4′ et 6) des montants (1), des conduits de câbles (400) presque fermés.

6. Système de bâti selon la revendication 4, caractérisé en ce que chaque languette (32) des râteliers à câbles (30) est inclinée obliquement dans le sens de la longueur de la bande longitudinale (31), les plans dans lesquels s'étendent les languettes obliques formant avec le plan dans lequel s'étend la bande longitudinale (31) un angle aigu et la distance comprise, dans le sens transversal, entre les bords de séparation (36) au niveau des extrémités libres de languettes voisines (32) étant nettement plus grande, dans le sens perpendiculaire au plan dans lequel s'étendent les languettes (32), à la distance comprise entre les bords de séparation voisins dans le sens de la longueur de la bande longitudinale.

7. Système de bâti selon la revendication 1, caractérisé en ce que les perforations (7) ménagées dans les surfaces d'assemblage (3) des montants (1) qui sont situées du côté frontal sont des fentes horizontales permettant l'insertion d'éléments d'assemblage multiple (20) et que les perforations (8) ménagées dans les parois latérales (6) des montants (1) sont des alésages du système qui servent à l'insertion d'autres unités du système.

8. Système de bâti selon la revendication 7, caractérisé par une console de commutation (23) qui peut s'insérer dans les surfaces d'assemblage des montants (1) situées du côté frontal.

9. Système de bâti selon la revendication 7, caractérisé en ce qu'une autre unité du système est constituée par une table d'essai (22).

10. Système de bâti selon la revendication 1, caractérisé en ce que, dans la zone des parties de paroi (4) parallèles, des plaques couvrantes (37) peuvent être montées sur les montants (1) à l'aide de moyens de serrage élastiques situés sur la côté arrière.

# FIG. 1

FIG. 3

FIG. 2

FIG. 4